## Europäisches Patentamt

## European Patent Office

## Office européen des brevets

(19)

(11) Veröffentlichungsnummer: **0 231 863**
**B1**

(12) **EUROPÄISCHE PATENTSCHRIFT**

(45) Veröffentlichungstag der Patentschrift: **04.04.90**

(21) Anmeldenummer: **87101115.1**

(22) Anmeldetag: **27.01.87**

(51) Int. Cl.⁵: **C 04 B 35/58,** C 04 B 35/00 //
B01F17/38

(54) Stabile Schlickergussmasse auf Basis von feinteiligen Aluminiumnitrid-enthaltenden Pulvern.

(30) Priorität: **28.01.86 DE 3602420**

(43) Veröffentlichungstag der Anmeldung:
**12.08.87 Patentblatt 87/33**

(45) Bekanntmachung des Hinweises auf die
Patenterteilung:
**04.04.90 Patentblatt 90/14**

(84) Benannte Vertragsstaaten:
**AT BE CH DE FR GB IT LI NL SE**

(56) Entgegenhaltungen:
GB-A-2 127 390
US-A-4 184 884
US-A-4 540 673

CHEMICAL ABSTRACTS, Band 104, Nr. 20, 19.
Mai 1986, Seite 289, Spalten 1, 2,
Zusammenfassungsnr. 173161x, Columbus,
Ohio, US; H. EGAMI "Aluminium nitride green
sheets", & JP - A - 60 180 954 (TOSHIBA CORP.)
14.09.1985

(73) Patentinhaber: **Elektroschmelzwerk Kempten
GmbH
Herzog-Wilhelm-Strasse 16
D-8000 München 2 (DE)**

(72) Erfinder: **Matje, Peter, Dr. Dipl.-Chem.
Schwarzachen 4
D-8961 Wiggensbach (DE)**
Erfinder: **Diesch-Müller, Stefanie, Dipl.-Ing.
Im Ösch 18
D-8961 Wiggensbach (DE)**

(56) Entgegenhaltungen:
TOSHIBA REVIEW, Nr. 153, 1985, Seiten 49-53,
Tokyo, JP; N. IWASE et al.: "Aluminium nitride
having high thermal conductivity"

**Beschreibung**

Polykristalline Formkörper auf Aluminiumnitrid-Basis, die aus feinteiligen AlN-enthaltenden Ausgangspulvern durch Sinterung mit oder ohne Druckanwendung hergestellt werden können, sind seit langem bekannt. Aufgrund ihrer Eigenschaften, wie gute Hochtemperaturfestigkeit und Oxidationsbeständigkeit, hohe Wärmeleitfähigkeit und niedrige elektrische Leitfähigkeit gewinnen sie insbesondere als Tiegelmaterial, beispielsweise zum Ziehen von Einkristallen oder als Substratwerkstoffe für integrierte Schaltkreise zunehmend an Bedeutung.

Aufgrund der begrenzten Formgebungsmöglichkeiten beim konventionellen Heißpressen werden für die Herstellung von Teilen mit komplizierter Form drucklose Sinterverfahren bevorzugt, bei welchen die Ausgangspulver unter Bildung von Grünkörpern der gewünschten Endform kompaktiert werden müssen, bevor sie durch Erhitzen auf die hierzu erforderlichen Temperaturen gesintert werden können.

Unter den bekannten Formgebungsverfahren zur Herstellung von Grünkörpern in Form von beispielsweise dünnen Platten oder dünnwandigen Tiegeln sollte das Schlickergießen besonders geeignet sein, das nicht nur zeit- und kostensparend ist, sondern das sich auch bereits für andere sonderkeramische Werkstoffe (advanced ceramics) wie solchen auf $Si_3N_4$-Basis und SiC-Basis bewährt hat. (vergleiche E. M. Rabinovich et al., J. Mater. Sci. 1982, 17 (2), S. 323—328; ref. in c. A. Vol. 96, 1982, No. 204230s und

M. Persson et al., Mater. Sci. Monogr. 1983, 16 (Ceram. Powders) S. 735—742; ref. in C. A. vol. 99, 1983, No. 75586y).

Ein Hinweis auf einen Versuch das Schlickergießen auch für keramische Werkstoffe auf AlN-Basis anzuwenden, findet sich in der GB—A—1052590. Hier wurden als flüssige Dispersionsmedien ausschließlich organische Lösungsmittel verwendet, wie aliphatische und aromatische Kohlenwasserstoffe oder Alkohol, in welchen das als Entflockungsmittel (deflocculant) eingesetzte polymere Cyclopentadien gut löslich ist. In den Beispielen wurden jedoch für den Einsatz von keramischen Pulvern auf AlN-Basis mit Xylol als Dispersionsmedium und anschließendem Sintern keine Angaben über erzielte Sinterdichten gemacht. Außerdem wurde ausdrücklich darauf hingewiesen, daß es bei Verwendung von Wasser als Dispersionsmedium praktisch unmöglich war, Gießkörper mit befriedigenden Eigenschaften zu erhalten aufgrund der Tatsache, daß die meisten der keramischen Materialien Verunreinigungen enthielten, die mit Wasser unter Bildung von Nebenprodukten reagierten, welche den physikalischen Zusammenhalt der resultierenden Körper störend beeinflußten.

Ein weiterer Hinweis auf das mögliche Schlickergießen von keramischen Pulvern auf AlN-Basis ist der US—A—4184884 zu entnehmen, die Angaben beschränken sich jedoch darauf, daß eine Schlickergußmasse mit etwa 50 bis 70% Feststoffgehalt in Wasser vorteilhaft sei.

Obwohl auch in der EP—A—133275 (die der US—A—4478785 entspricht) die sich ausschließlich mit der drucklosen Sinterung von reinen AlN-Formkörpern befaßt, das Schlickergießen unter anderen bekannten Formgebungsverfahren erwähnt wird, fand diese Methode für die Formgebung AlN-enthaltender Körper bisher praktisch keine Anwendung. Derartige Schlickergußmassen mit organischen Lösungsmitteln als Dispersionsmedium sind schwierig zu handhaben und erfordern zusätzliche Hilfsstoffe, die jeweils genau auf das verwendete Lösungsmittel abgestimmt sein müssen, um die Sedimentationsneigung des AlN-Pulvers zu kompensieren, während Schlickergußmassen mit Wasser als Dispersionsmedium aufgrund der bekannten Hydrolyseneigung des Aluminiumnitrids nicht stabil sind.

Es stellt sich somit die Aufgabe eine Schlickergußmasse mit hohem Feststoffgehalt auf Basis von feinteiligen, AlN-enthaltenden Pulvern in einem flüssigen Dispersionsmedium und Zusätzen für die Regelung der zum Schlickergießen erforderlichen Viskosität zur Verfügung zu stellen, die einfach zu handhaben sind, keine zusätzlichen Hilfsstoffe benötigen und die sowohl chemisch als auch physikalisch ausreichend stabil sind.

Diese Aufgabe wird erfindungsgemäß dadurch gelöst, daß die Schlickergußmasse mit einem Feststoffgehalt von 50 bis 80 Gewichtsprozent als flüssiges Dispersionsmedium Wasser im Gemisch mit einem wasserlöslichen, aliphatischen, mehrwertigen Alkohol enthält.

Als mehrwertige Alkohole werden vorteilhaft solche mit 3 bis 5 C-Atomen und 2 bis 4 Hydroxylgruppen ausgewählt, wobei sich Glyzerin besonders bewährt hat. Das Gewichtsverhältnis von mehrwertigem Alkohol zu Wasser kann dabei in dem breiten Bereich von 1:99 bis 50:50 variiert werden. Vorzugsweise beträgt die Menge des Alkohols etwa 1 bis 20 Gewichtsprozent, bezogen auf das Gesamtgewicht von Alkohol und Wasser. Gute Ergebnisse werden beispielsweise mit etwa 5 bis 10 Gewichtsprozent Glyzerin, bezogen auf das Gesamtgewicht von Glyzerin und Wasser erzielt.

Für die Herstellung der erfindungsgemäßen Schlickergußmasse werden als feinteilige AlN-Pulver vorteilhaft solche mit Teilchengrößen von 2 µm und feiner eingesetzt. Als Maß für die Teilchengröße kann die spezifische Oberfläche, gemessen nach BET, herangezogen werden. Pulver mit einer spezifischen Oberfläche im Bereich von 4 bis 10 m² pro Gramm haben sich dabei besonders bewährt. Zusätzlich können Sinterhilfsmittel, welche die Verdichtung der AlN-Grünkörper bei der anschließenden Sinterung unterstützen, wie $Y_2O_3$, $Cr_2O_3$, CaO und MgO in Mengen bis zu etwa 5 Gewichtsprozent, bezogen auf das Gesamtgewicht der Feststoffe, mitverwendet werden, sowie andere keramische Pulver, wie $Al_2O_3$, $ZrO_2$, BN, $Si_3N_4$ und SiC in beliebiger Menge, wenn die Herstellung von Mischwerk-

stoffen (composite materials) auf AlN-Basis beabsichtigt ist. Sinterhilfsmittel und keramische Pulver sollten dabei etwa gleiche Teilchengrößen wie das AlN-Pulver haben.

Zur Herstellung der erfindungsgemäßen Schlickergußmasse werden die Feststoffe in dem Alkohol/Wassergemisch mit Hilfe üblicher bekannter Maßnahmen suspendiert, beispielsweise durch Verrühren in Mischquirlen, und durch Zugabe eines handelsüblichen Verflüssigers auf die zum Schlickergießen erforderliche Viskosität eingestellt. Als Verflüssiger werden vorteilhaft Substanzen ausgewählt die den pH-Wert nicht beeinflussen wie solche auf Carbonsäureesterbasis oder auf Polyacrylatbasis. Der Zusatz von Hilfsstoffen, wie Bindemittel, Entflockungsmittel oder Schutzkolloide ist im allgemeinen nicht erforderlich. Wenn überhaupt sollten nur solche ausgewählt werden, die praktisch rückstandsfrei verkokbar sind, damit der Verdichtungsvorgang bei der anschließenden Sinterung der Grünkörper nicht durch Rückstände aus derartigen Hilfsstoffen störend beeinflußt wird.

Unter Einhaltung der genannten Bedingungen kann die erfindungsgemäße Schlickergußmasse mit einem Feststoffgehalt von 50 bis 80 Gewichtsprozent hergestellt werden, die in der zum Schlickergießen erforderlichen Zeit chemisch und physikalisch ausreichend stabil ist. Eine Verlängerung der Standzeit kann dadurch erreicht werden, daß die Herstellung der Schlickergußmasse bei Temperaturen unter 0°C vorgenommen wird. Die mögliche Gefrierpunktserniedrigung ist dabei von der Alkohlmenge im wässrigen Dispersionsmedium abhängig. So kann beispielsweise mit 5 Gewichtsprozent Glyzerinzusatz im wässrigen Dispersionsmedium bei—5°C gearbeitet werden.

Die mit Hilfe der erfindungsgemäßen Schlickergußmasse bei Formgebung durch Schlickergießen in an sich bekannter Weise erzeugten Grünkörper, worunter üblicherweise Formteile mit offener Porosität, d.h. mit zur Oberfläche offenen Poren zu verstehen sind, haben eine Gründichte von mindestens 60% der theoretisch möglichen Dichte. Die Grünkörper sind von guter Qualität, d.h. sie sind feinporig mit gleichmäßiger Feststoffverteilung. Beim Trocknen des in der Form verfestigten Schlickers ist keine Rißbildung zu beobachten. Durch orientierende Sinterversuche wurde festgestellt, daß diese Grünkörper unter Bildung von polykristallinen Formkörpern auf AlN-Basis mit einer theoretischen Dichte von mindestens 95%, insbesondere mindestens 98% verdichtet werden können.

Das in der erfindungsgemäßen Schlickergußmasse verwendete Dispersionsmedium auf wässriger Basis ist mit den zum Schlickergießen eingesetzten Formen, die üblicherweise aus Gips bestehen, gut verträglich, so daß diese wiederholt verwendet werden können, was aus wirtschaftlichen Gründen vorteilhaft ist. Darüber hinaus bietet das Arbeiten mit einem Dispersionsmedium auf wässriger Basis den zusätzlichen Vorteil der einfachen und umweltfreundlichen Handhabung.

Die erfindungsgemäßen Schlickergußmassen können auch in Schlickerdruckgußmaschinen verarbeitet werden, in welchen anstelle der Gipsformen poröse, kunststoffbeschichtete Metallformen verwendet werden. Diese Methode eignet sich besonders zur wirtschaftlichen Herstellung kompliziert geformter Hohlkeramikteile, wobei die Homogenhaltung der Schlickergußmasse in Vorratsbehältern und -leitungen Voraussetzung ist.

In den folgenden Beispielen wurde für die Herstellung der Schlickergußmasse ein technisches AlN-Pulver mit folgender Pulvercharakteristik verwendet:

| | |
|---|---|
| $O_2$ | 2,9 Gew.-% |
| $N_2$ | 32,1 Gew.-% |
| $C_{anhaftend}$ | 0,3 Gew.-% |
| $Fe_{anhaftend}$ | 0,30 Gew.-% |
| spez. Oberfläche nach BET | 5,5 $m^2$/g |
| durchschnittl. Teilchengröße | <2 µm |

Beispiel 1:

2000 g des AlN-Pulvers wurden zusammen mit einem Gewichtsprozent Yttriumoxid (durchschnittliche Teilchengröße <2 µm) in 1000 g eines vorbereiteten Gemisches aus Wasser mit 10 Gewichtsprozent Glyzerinzusatz unter Verrühren in einem Mischquirl eingetragen. Während des Eintragens wurde ein handelsüblicher Verflüssiger auf Carbonsäureesterbasis langsam zudosiert, wobei bis zum Erreichen einer "sahneartigen" Konsistenz der Schlickergußmasse insgesamt 0,11 Gewichtsprozent, bezogen auf das Gesamtgewicht der Mischung erforderlich waren. Die so erhaltene Schlickergußmasse mit einem Gesamtfeststoffgehalt von etwa 67 Gewichtsprozent wurde zum Entfernen eingeschlossener Luft im Vakuum entgast und dann in Gipsformen für Tiegel von jeweils 1000 ml Fassungsvermögen eingefüllt. Nach Erreichen der gewünschten Wandstärke von etwa 2,5 mm wurde überschüssige Schlickergußmasse durch Abgießen entfernt. Nach dem Abschwinden der Scherben wurden diese aus der Form entnommen und in Vakuum getrocknet. Die so hergestellten Grünkörper in Tiegelform hatten eine Gründichte von 65% der theoretisch möglichen Dichte. Sie waren von gleichmäßiger Beschaffenheit und wiesen keine Risse auf. Nach dem Sintern bei Temperaturen von >1700°C hatten die Tiegel aus polykristallinem AlN eine Dichte von 98,1% der theoretisch möglichen Dichte.

Vergleichsbeispiel:

Dieses Beispiel wurde aus Sicherheitsgründen mit einer geringeren Menge durchgeführt:

50 g des AlN-Pulvers wurden zusammen mit 1 Gewichtsprozent $Y_2O_3$ in 25 ml Wasser ohne Zusatz suspendiert. Bereits während des Einrührens war der stechende Geruch von $NH_3$ deutlich wahrnehmbar. Nach etwa 15 Minuten führte die Hydrolyse des AlN unter verstärkter $NH_3$-Entwicklung zum Sieden der Suspension. Nach weiteren 15 Minuten war das AlN praktisch vollständig hydrolysiert. Die Herstellung einer Schlickerguß-

masse aus AlN war nicht möglich.

**Beispiel 2:**

2000 g einer Mischung aus 80 Gewichtsprozent des AlN-Pulvers und 20 Gewichtsprozent SiC von Submikronfeinheit wurden zusammen mit einem Gewichtsprozent des $Y_2O_3$ unter den gleichen Bedingungen wie im Beispiel 1 beschrieben in 1000 g Wasser mit 10 Gewichtsprozent Glyzerinzusatz eingetragen und eine Schlickergußmasse hergestellt. Nach dem Sintern hatten die Tiegel aus polykristallinen AlN und SiC eine Dichte von 98% der theoretisch möglichen Dichte.

**Beispiel 3**

2000 g des AlN-Pulvers wurden zusammen mit 1 Gewichtsprozent des $Y_2O_3$ in 1000 g Wasser mit 5 Gewichtsprozent Glyzerinzusatz eingetragen, wobei alle Komponenten auf −5°C gekühlt wurden. Die so hergestellte Schlickergußmasse konnte unter den gleichen Bedingungen wie im Beispiel 1 beschrieben weiterverarbeitet werden mit gleich gutem Ergebnis.

**Patentansprüche**

1. Stabile Schlickergußmasse mit einem Gesamtfeststoffgehalt von 50 bis 80 Gew.-% auf Basis von feinteiligen, AlN-enthaltenden Pulvern in einem flüssigen Dispersionsmedium und Zusätzen für die Regelung der zum Schlickergießen erforderlichen Viskosität, dadurch gekennzeichnet, daß sie als flüssiges Dispersionsmedium Wasser im Gemisch mit einem wasserlöslichen, aliphatischen, mehrwertigen Alkohol enthält.

2. Schlickergußmasse nach Anspruch 1, dadurch gekennzeichnet, daß das flüssige Dispersionsmedium Wasser im Gemisch mit dem Alkohol im Gewichtsverhältnis von 99:1 bis 50:50 enthält.

3. Schlickergußmasse nach Anspruch 1, dadurch gekennzeichnet, daß das flüssige Dispersionsmedium 1 bis 20 Gew.-% des Alkohols, bezogen aus das Gesamtgewicht von Wasser und Alkohol enthält.

4. Schlickergußmasse nach Anspruch 1, dadurch gekennzeichnet, daß als Alkohol Glyzerin verwendet wird.

5. Schlickergußmasse nach Anspruch 1, dadurch gekennzeichnet, daß sie als Feststoffe AlN-Pulver mit Teilchengroßen von 2 μm und feiner, Sinterhilfsmittel, ausgewählt aus der Gruppe $Y_2O_3$, $Cr_2O_3$, CaO und MgO und gegebenenfalls keramische Pulver ausgewählt aus der Gruppe $Al_2O_3$, $ZrO_2$, BN, $Si_3N_4$ und SiC enthält.

6. Schlickergußmasse nach Anspruch 1, dadurch gekennzeichnet, daß sie als Zusätze für die Regelung der zum Schlickergießen erforderlichen Viskosität Verflüssiger auf Polyacrylatbasis oder Carbonsäureesterbasis enthält.

**Revendications**

1. Composition stable pour coulée en barbotine, ayant une teneur totale en matière sèche de 50 à 80% en poids, à base de poudres en particules fines contenant de l'AlN, dans un milieu liquide de dispersion, et comportant des additifs pour le réglage de la viscosité nécessaire pour la coulée en barbotine, composition caractérisée en ce qu'elle contient, comme milieu liquide pour la dispersion, de l'eau en mélange avec un polyalcool aliphatique hydrosoluble.

2. Composition pour coulée en barbotine selon la revendication 1, caractérisée en ce que le milieu liquide pour dispersion contient de l'eau en mélange avec l'alcool selon un rapport pondéral allant de 99:1 à 50:50.

3. Composition pour coulée en barbotine selon la revendication 1, caractérisée en ce que le milieu liquide pour dispersion contient 1 à 20% en poids de l'alcool, sur la base du poids total de l'eau et de l'alcool.

4. Composition pour coulée en barbotine selon la revendication 1, caractérisée en ce qu'on utilise du glycérol comme alcool.

5. Composition pour coulée en barbotine selon la revendication 1, caractérisée en ce qu'elle contient, comme solides, de la poudre de AlN ayant des grosseurs de particules égales ou inférieures à 2 μm, des adjuvants de frittage choisis parmi $Y_2O_3$, $Cr_2O_3$, CaO et MgO et éventuellement de la poudre céramique choisie parmi $Al_2O_3$, $ZrO_2$, BN, $Si_3N_4$ et SiC.

6. Composition pour coulée en barbotine selon la revendication 1, caractérisée en ce qu'elle contient, comme additif pour le réglage de la viscosité nécessaire pour la coulée en barbotine, des fluidifiants à base de polyacrylates ou d'un ester d'acide carboxylique.

**Claims**

1. Stable slip-casting composition having a total solids content of 50 to 80% by weight and based on fine-grained AlN-containing powders in a liquid dispersion medium and additives for controlling the viscosity required for slip-casting, characterized in that it contains, as the liquid dispersion medium, water mixed with a watersoluble aliphatic polyhydric alcohol.

2. Slip-casting composition according to Claim 1, characterized in that the liquid dispersion medium contains water mixed with the alcohol in the weight ratio from 99:1 to 50:50.

3. Slip-casting composition according to Claim 1, characterized in that the liquid dispersion medium contains 1 to 20% by weight of the alcohol, relative to the total weight of water and alcohol.

4. Slip-casting composition according to Claim 1, characterized in that glycerol is used as the alcohol.

5. Slip-casting composition according to Claim 1, characterized in that it contains, as the solids, AlN powder having particle sizes of 2 μm and

finer, sinter aids selected from the group comprising $Y_2O_3$, $Cr_2O_3$, CaO and MgO and, if appropriate, ceramic powders selected from the group comprising $Al_2O_3$, $ZrO_2$, BN, $Si_3N_4$ and SiC.

6. Slip-casting composition according to Claim 1, characterized in that it contains, as additives for controlling the viscosity required for slip-casting, a plasticizer based on polyacrylate or carboxylic acid esters.